(19) **Europäisches Patentamt**

**European Patent Office**

**Office européen des brevets**

(11) **EP 1 508 422 A1**

(12) **EUROPEAN PATENT APPLICATION**

(43) Date of publication:
**23.02.2005 Bulletin 2005/08**

(51) Int Cl.⁷: **B29C 44/22**

(21) Application number: **04103077.6**

(22) Date of filing: **30.06.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **14.07.2003 NL 1023916**

(71) Applicant: **RECTICEL**
**1200 Brussels (BE)**

(72) Inventors:
• **Mortelmans, Rudi. c/o Recticel N.V.**
  **9230 Wetteren (BE)**
• **Raman, Koen. c/o Recticel N.V.**
  **9230 Wetteren (BE)**
• **Lievestro, Rob. c/o Recticel Nederland B.V.**
  **4041 CL Kesteren (NL)**
• **Hesse, Huib. c/o Recticel Nederland B.V.**
  **4041 CL Kesteren (NL)**

(74) Representative: **Van Reet, Joseph et al**
**Gevers & Vander Haeghen,**
**Holidaystraat 5**
**1831 Diegem (BE)**

(54) **Process for the continuous manufacture of polyurethane foam blocks**

(57) Process for the continuous manufacture of polyurethane foam blocks wherein the trough (2) of a continuous foaming machine is divided in at least two trough sections (4,5,6) wherein different foamable polyurethane reaction mixtures (7,8,9) are fed to produce foam blocks (1) comprising different foam portions (25,26,27). The volume of each trough section is adjusted in such a manner that the heights of the rising reaction mixtures differ less than 2 cm when leaving the trough sections. Moreover, the reaction mixtures are formulated to have such a rise profile that during the further foam rise the theoretical differences between the rise heights, assuming vertical interfaces between the rising foams, remain smaller than 5 cm. In this way, the interfaces between the different foam portions in the produced foam blocks are sufficiently vertical to cut uniform multi-zone mattresses out of the foam blocks. Compared to the existing method wherein different foam parts have to be glued together, the multi-zone mattresses can be produced with less costs.

*Fig. 1*

**Description**

The present invention relates to a process for the continuous manufacture of polyurethane foam blocks as defined in the preamble of claim 1.

An example of such a process is the so-called Maxfoam process. In this known process the foamable polyurethane reaction mixture is fed into the bottom of a trough where it slowly begins to react. The reacting mass flows over the forward edge of the trough onto a bottom paper, which is sliding at a constant velocity on an inclined fall plate. The fall plate is made up of different sections hinged together at pivot points. The angle of each fall-plate section can be adjusted to match the rise profile of the foam formulation. In this way, a flat-topped block can be achieved showing either a flat or a slightly domed top surface. The produced foam blocks are destined to be cut into different kinds of foam parts, in particular into complete mattresses or foam parts or layers for mattresses or seats.

A drawback of the known process is that the mattresses cut out of such foam blocks are of a uniform composition. For supporting a user in a more optimal way, a mattress has to show however zones with different properties. The mattress can for example be a three-zone mattress or even a five-zone mattress comprising two end zones (head and feet zones), a middle zone (lumbar area) and two zones (pelvis zone and shoulder zone) separating the middle zone from the end zones. The two end zones and the middle zones should be softer than the two zones separating them. A three or a five zone mattress can be produced by gluing foam parts of different properties (cut from different slabstock foam blocks) together. However, it appears to be quite difficult to glue these foam parts together without seams. Moreover, such a gluing process is labour intensive and has thus an important effect on the cost price of the mattress.

US-A-4 073 839 discloses a process for moulding mattresses having zones of varying hardness by pouring, by means of multiple pour heads, different foamable polyurethane reaction mixtures in one and the same mould. According to this US patent, the problem of the known processes was that the zones of different density were erratic and that the interfaces between the zones were difficult to control. To solve this problem, US-A-4 073 839 proposes to spray the different foamable reaction mixtures in a fan-like planular pattern and to adjust those patterns to control the area of overlap between the different zones. According to US-A-4 073 839 such a process can not only be used for moulding mattresses in individual moulds but the foamable reaction mixtures could also be applied onto a moving slab belt. However, US-A-4 073 839 does not teach to produce foam blocks having a height higher than 0.7 m but only teaches to produce mattresses which have, in practice, a considerably smaller height or thickness, in particular smaller than 20 cm.

Compared to foam slabs having the height of a mattress, the verticality of the interface between the different zones is much more important for thicker foam blocks. Indeed, the mattresses are cut horizontally out of the foam blocks so that a non-vertical interface between the different zones would result in unacceptable differences between the mattresses. US-A-4 073 839, however, does not disclose how to achieve a sufficiently vertical interface between the different zones when manufacturing such high foam blocks. It even does not teach at all that it would be possible to manufacture such high foam blocks with a sufficiently vertical interface between the different zones.

An object of the present invention is therefore to provide a new process for the continuous manufacture of polyurethane foam blocks which enables to manufacture foam blocks having zones produced of different foamable reaction mixtures and wherein the interfaces between the different zones are sufficiently vertical in particular to cut uniform multi-zone mattresses out of the foam block.

To this end the process according to the invention is characterised by the features defined in the characterising portion of claim 1.

In the method according to the invention, the trough of the continuous foaming machine is divided by at least one partition wall in at least two through sections. In each of the trough sections a different foamable reaction mixture is introduced so that the produced foam blocks are composed of portions made of a different polyurethane foam. It has been found that the verticality of the interface between the different foam portions can be controlled by adjusting the volumes of the trough sections and by formulating the different reaction mixtures to have a particular rise profile. The volumes of neighbouring trough sections should more particularly be adjusted in such a manner that the rising reaction mixtures have risen to heights which differ less than 2 cm, preferably less than 1 cm, from each other, when leaving the neighbouring trough sections. The rise profiles of the reaction mixtures introduced in the neighbouring trough sections should be so similar that, when rising further to 70% of the average height reached by the rising reaction mixtures, any difference between the average heights of the neighbouring rising reaction mixtures should be smaller than 5 cm and preferably smaller than 3 cm, the height difference being determined assuming a vertical interface between the rising reaction mixtures. In order to achieve an interface between two adjacent foam portions which is as vertical as possible, the differences between the heights of the rising reaction mixtures should be reduced as much as possible.

The present invention also relates to a process for manufacturing multi-zone mattresses, which is characterised in that the mattresses are cut in a transverse direction out of a polyurethane foam block manufactured in accordance with the process according to the invention.

The present invention moreover relates to a foam block obtainable by the process according to the invention and to a mattress cut out of such a foam block.

Other particularities and advantages of the invention will become apparent from the following description of some particular embodiments of the process according to the present invention. The reference numerals used in this description relate to the annexed drawings wherein:

Figure 1 illustrates schematically a Maxfoam machine adjusted to produce a multi-zone polyurethane foam block in accordance with the process according to the present invention;
Figure 2 is a schematic top plan view on a machine as illustrated in Figure 1;
Figures 3 and 4 are cross-sectional views along lines III-III and IV-IV in Figure 2;
Figures 5 and 6 are similar to Figures 3 and 4 but illustrate the production of a foam block for five instead of for three-zone mattresses;
Figure 7 illustrates on a larger scale the somewhat oblique and curved interface lines between the portions of the foam block illustrated in Figure 4;
Figure 8 is a graph illustrating the rise profiles of two foamable polyurethane reaction mixtures which can be used together in the process according to the invention; and
Figure 9 is a graph illustrating the rise profiles of two foamable polyurethane reaction mixtures which are not appropriate for being used together in the process according to the invention.

The invention relates to a process for the continuous manufacture of polyurethane foam blocks 1 which comprise, seen in cross-section, portions produced of different foamable polyurethane reaction mixtures. In this way, multi-zone mattresses, having two or more zones of a different polyurethane foam material can be cut directly out of such blocks, more particularly in the transverse direction thereof. A problem with the manufacture of such blocks is that the interfaces between the different foam portions or zones should be as vertical as possible so that uniform mattresses can be produced, i.e. mattresses which are all almost the same. To be able to achieve such vertical interfaces, use is made in the process according to the invention of a foaming machine wherein the different foamable polyurethane reaction mixtures are fed in a trough divided by means of at least one partition wall in at least two trough sections.

In practice there are a number of continuous foaming machines wherein one single reaction mixture is fed in a trough. A first example thereof is the so-called Maxfoam machine. Other examples wherein this Maxfoam technology is used are the Varimax and the C-Max foaming machines. Since these machines are known by the skilled person, no detailed description needs to be given of these continuous foaming machines. Moreover, it will be clear that the scope of the invention is not limited to the use of a particular foaming machine.

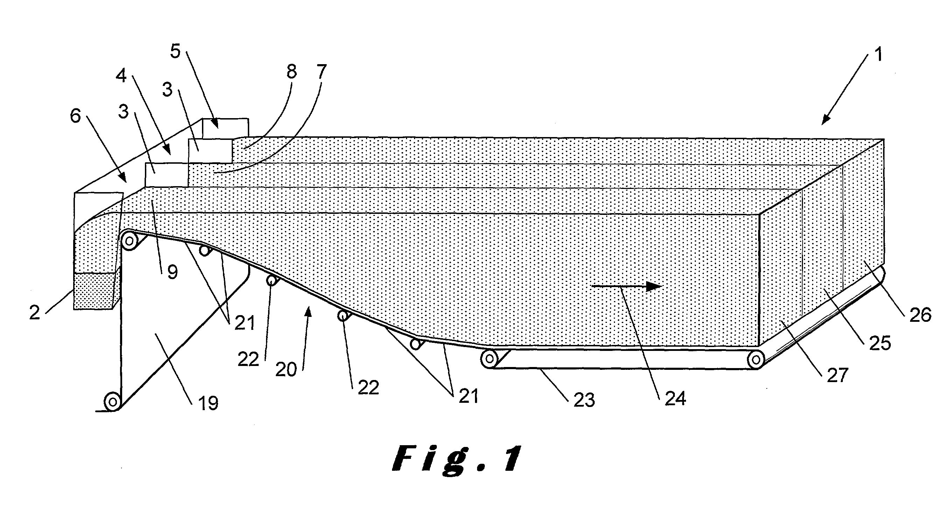

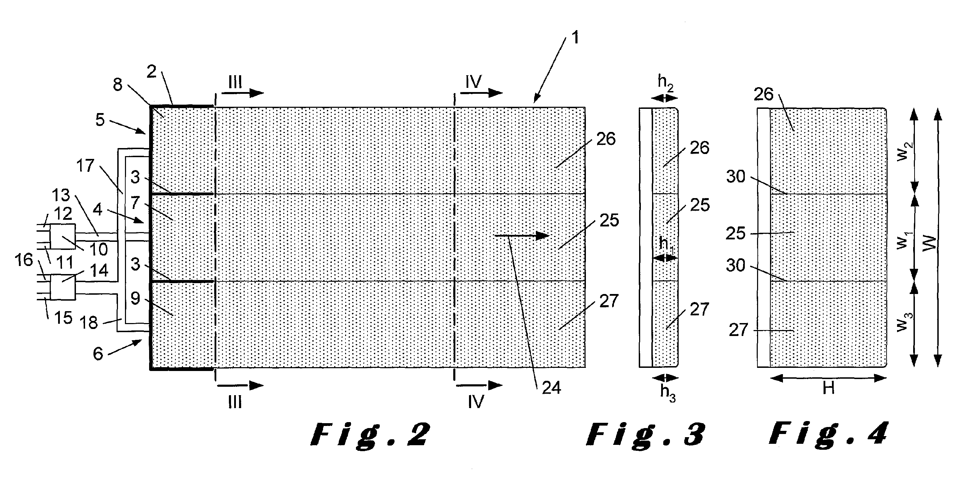

Figure 1 illustrates schematically the principles of a Maxfoam machine which has been adjusted to function in accordance with the process according to the invention. The foaming machine comprises a trough 2 which has been divided by means of two partition walls 3 into three trough sections, namely a first or middlemost trough section 4 and a second 5 and a third trough section 6 each on an opposite side of the first trough section 4. In the bottom of each of the different trough sections a first 7, a second 8 and respectively a third foamable polyurethane reaction mixture 9 is introduced. The first reaction mixture 7, fed in the first trough section 4, is different from the second and the third reaction mixtures. As illustrated in Figure 2, the second and the third reaction mixtures may however be the same so that symmetrical multi-zone mattresses can be cut out of the foam block. The first foamable reaction mixture is prepared in a first mixing head 10 which has a polyol component feed line 11 and an isocyanate component feed line 12 and is connected with a pipe 13 to the first trough section 1. The second and third reaction mixtures (which are the same in this example) are prepared in a second mixing head 14 which has a polyol component feed line 15 and an isocyanate component feed line 16 and is connected with pipes 17 and 18 to the second 5 and the third trough sections 6.

The reaction mixtures arriving underneath in the trough sections are liquid and remain in the trough sections at least until they start to rise to produce a foam. The rising reactions mixtures 7, 8, 9 flow subsequently over the forward edges of the trough sections onto a bottom sheet 19. This bottom sheet 19 slides downward over a fall plate 20 made up of four to seven sections 21 which are hinged together at pivot points 22. The pivot points 22 can be lowered or raised to change the configuration of the fall-plate sections 21 to match the rise profile of the foamable reaction mixtures. After the fall plate, the foam which has been produced thereon arrives on a conveyer 23 transporting the foam, at a predetermined velocity v, in a direction 24 to a cutting unit (not illustrated).

The thus produced blocks 1 are usually substantially rectangular and have a width W larger than 1 m, in particular larger than 1.5 m and a height larger than 0.7 m. The width W is for example equal to 2 or 2.1 m so that it is possible to cut mattresses having a length of 1.9 m, 2 m or optionally 2.1 m in the transverse direction out of these blocks. In theory, the width W of the block may vary somewhat over the height of the mattress, in which case the average width W should be larger than the above indicated limits. The same applies for the height in the case of blocks with a non-flat top surface. The length of the blocks is greater than 5 m, and may in practice even reach 50 or 60 m.

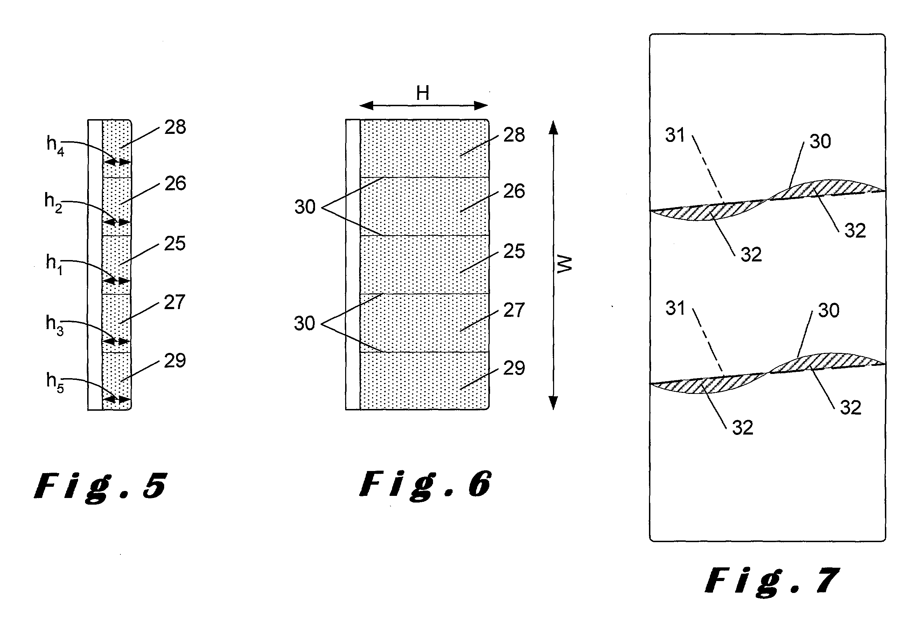

In the blocks manufactured with the machine illustrated in Figures 1 and 2 (see Figure 4) the portion 25 produced from the first reaction mixture 7 has an average width $W_1$, the portion 26 produced from the second reaction mixture 8 an average width $w_2$ and the portion 27 produced from the third reaction mixture 8 an average width $w_3$. The different portions of the foam block have further respectively a density $D_1$, $D_2$ and $D_3$. These densities may be different or the same. If they are the same, the foams produced from the different reaction mixtures may differ in colour, hardness or other physical or chemical properties.

For producing foam blocks at a velocity v with the machine illustrated in Figures 1 and 2, the different flow rates (in kg/min) are first determined based on the following formulas :

- the flow rate of the first reaction mixture to the first trough section:

$$Q_1 = H*w_1*v*D_1$$

- the flow rate of the second reaction mixture to the second trough section:

$$Q_2 = H*w_2*v*D_2 \text{ and}$$

- the flow rate of the third reaction mixture to the third trough section:

$$Q_3 = H*w_3*v*D_3.$$

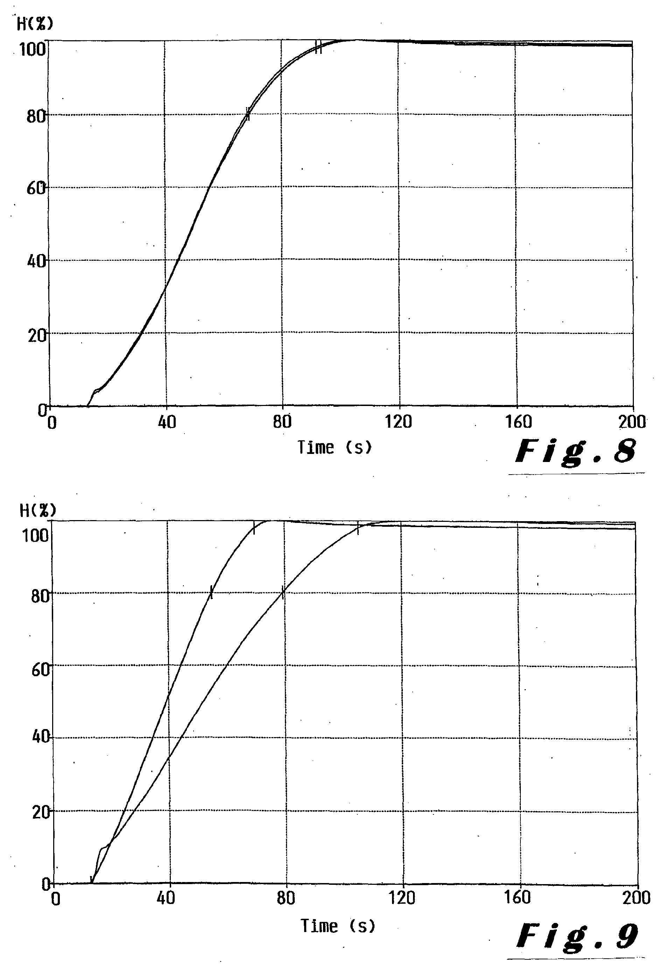

For each reaction mixture a rise profile is established. When the second and the third reaction mixtures 8, 9 are identical, only two rise profiles have to be established. These rise profiles indicate the rise height of the foamable reaction mixture (expressed as a percentage of the total rise) as a function of the time after the mixing of the reaction components. The first part of the graph is the so-called "cream time", i.e. the time between the mixing of the foam ingredients and the beginning of the foam rise. The second part of the graph is then the so-called "rise time". Figure 8 illustrates the rise profiles of two reaction mixtures which have a very similar rise profile so that they can be used together in the process according to the invention whilst Figure 9 illustrates the rise profiles of two reaction mixtures which are so different that they cannot be used together in the process according to the invention.

In the process according to the invention the volumes $V_1$, $V_2$ and $V_3$ of the different trough sections (including the volume of the pipelines from the mixheads to the trough sections) are selected in such a manner that, when leaving the trough sections and coming into contact with one another, the neighbouring reaction mixtures have risen to respectively a first average height ($h_1$) and a second average height ($h_2$), which differ less than 2 cm, preferably less than 1 cm, from one another. In the example illustrated in Figures 1 to 4 this applies for the first and the second reaction mixtures, which have risen to a height $h_1$ and $h_2$ when coming into contact with one another (see Figure 3), and for the first and the third reaction mixtures, which have risen to a height $h_1$ and $h_3$ when coming into contact with one another (see again Figure 3). In Figures 5 and 6 an example of a foam block with five zones is illustrated. In that case the volumes $V_1$, $V_2$, $V_3$, $V_4$ and $V_5$ of the different trough sections are selected in such a manner that the differences between the heights of the reaction mixtures which come into contact with one another upon leaving the trough sections, namely the differences between $h_1$ and $h_2$, $h_1$ and $h_3$, $h_2$ and $h_4$, and $h_3$ and $h_5$, are smaller than 2 cm and preferably smaller than 1 cm. If the height of one rising reaction mixture is not large enough, the volume of the corresponding trough section should be increased.

For controlling the verticality of the interface between the foam portions during the further rising of the reaction mixtures, these reaction mixtures are formulated to have such a rise profile, that when rising further to at least 70% of said average height (H), any difference between the average heights of the neighbouring rising reaction mixtures, determined in a direction perpendicular to the travelling direction 24 of the foam and assuming a vertical interface between the rising reaction mixtures, is smaller than 5 cm and preferably even smaller than 3 cm. These differences can be deduced easily from the rise profiles as illustrated for example in Figures 8 and 9.

As mentioned already herebefore, Figure 9 illustrates the rise profiles of reaction mixtures which cannot be used together in the process according to the invention. Indeed, when the slowest rising reaction mixture has risen to 70% of its total rise height, the fastest reaction mixture has already risen to about 98% of its total rise height. Even for a block having only a height of 70 cm, this corresponds to a difference of about 19 cm. For the reaction mixtures having the rise profiles illustrated in Figure 8, the differences between these rise profiles are so small that, even when making higher foam block, the actual difference in rise height is always smaller than 5 cm, and in particular smaller than 3 cm. It has been found that, by keeping the differences between the "theoretical" rise heights, according to the rise profiles, below those upper limits, and by adjusting the volumes of the different trough sections as defined hereabove, a sufficiently vertical interface can be obtained between the different foam regions in the foam block. When determining the rise heights of the different reaction mixtures and comparing them with one another, it is possible that the rise profiles should be shifted somewhat with respect to one another. This is the case when the trough volumes are adjusted so that the reaction mixtures have not the same dwell time in the trough sections due to for example a difference in cream time. In that case, the rise profiles may be shifted with respect to one another over a distance corresponding to the difference between said dwell times, in particular in such a manner that the different cream times coincide with one another.

The partition walls may be situated entirely within the trough or may extend, as illustrated in Figures 1 and 2, from the trough over a short distance above the fall plate. The partition wall or walls 3 in the trough 2 preferably separate the rising reaction mixtures at least until they have risen to 1 %, preferably to 2% and more preferably to 3% of their total rise height. However, they preferably separate the rising reaction mixtures at the most until they have risen to 20%, preferably to 15% and more preferably to 10% of their total rise height. This can be determined easily by determining the time the reaction mixtures need to flow from the mix heads 10, 14 to the end of the partition walls 3 and to determine on the rise profiles the extent to which they have already risen at that time (percentage of their total rise height).

The process according to the invention enables to produce large foam blocks comprising two or more longitudinal portions made of a different polyurethane foam. These blocks are in particular suited to cut entire mattresses out of these blocks. These mattresses may in particular be three or five zoned mattresses. Figure 6 illustrates a cross-section of a foam block for producing five zone mattresses. The first 25, the fourth 28 and the fifth foam portions 29 are preferably made of a first foamable polyurethane reaction mixture whilst the second 26 and the third foam portions 27 are preferably made of a second foamable polyurethane reaction mixture. In this case, the first reaction mixture is preferably formulated to produce a polyurethane foam which is softer than the polyurethane foam produced from the second reaction mixture.

By performing the process in the way described above, a skilled person can produce large foam blocks wherein the interface lines, i.e. the lines between the different foam regions seen in different cross-sections of the foam blocks, are sufficiently vertical. These interface lines 30 (see on a larger scale Figure 7) may be straight or curved. If they are curved, a linear line 31 can be drawn through the respective interface line 30 so that the surface area 32 between the interface line 30 and this linear line 31 is minimised. In practice, this can be done easily by a linear regression analysis.

The process according to the invention enables to manufacture foam blocks wherein the straight interface lines 30 and/or the linear lines 31 drawn through the curved interface lines, form an angle ($\alpha$) of between 80° and 90°, in particular between 85° and 90°, with the bottom surface of the block. Moreover, the interface between the different foam regions can be controlled in such a manner that, in the cross-sectional areas of the foam block between a height of 0.05∗H and a height of 0.95∗H measured from the bottom surface of the block, the interface lines 30 are either straight in different cross-sections of the block or are curved, in which case any distance between the interface line 30 and said linear line 31, measured in a direction parallel to the bottom surface of the block is smaller than 5 cm and preferably smaller than 3 cm.

## Claims

1. A process for the continuous manufacture of polyurethane foam blocks (1), wherein at least one foamable polyurethane reaction mixture is fed at a substantially constant flow rate into a trough (2), the foamable reaction mixture is allowed to remain in said trough at least until it starts to rise, the rising reaction mixture is allowed to flow out of the trough (2) onto an inclined fall plate (20), the rising reaction mixture is allowed to rise further when travelling downward over the fall plate (20), and the produced polyurethane foam is conveyed further in a predetermined direction (24) and at a predetermined velocity (v) on a conveyor (23) and cut into said blocks (1) which have an average height (H) higher than 0.7 m and an average width (W) larger than 1 m, in particular larger than 1.5 m, **characterised in that** said trough (2) is divided by means of at least one partition wall (3) in at least two trough sections, including a first trough section (4) having a first volume ($V_1$) and a second trough section (5) having a second volume ($V_2$), and a first foamable polyurethane reaction mixture (7) is fed in the first trough section (4) whilst a second foamable polyurethane reaction mixture (8), different from the first foamable polyurethane reaction mixture (7), is fed in the second trough section (5), the first and second reaction mixtures (7, 8) coming into contact with one another upon leaving the first and second trough sections to produce two adjoining portions (25, 26) of the polyurethane foam blocks (1), said first ($V_1$) and second volumes ($V_2$) being selected in such a manner that, when leaving the trough sections (4, 5) and coming into contact with one another, the first and second reaction mixtures (7, 8) have risen to respectively a first average height ($h_1$) and a second average height ($h_2$), which differ less than 2 cm, preferably less than 1 cm, from one another, and the first and second reaction mixtures being formulated to have such a rise profile, that when rising both from the first and the second average heights ($h_1$, $h_2$) to at least 70% of said average height (H), any difference between the average heights of the rising first and second reaction mixtures, determined in a direction perpendicular to the travelling direction (24) of the foam and assuming a vertical interface (30) between the rising reaction mixtures, is smaller than 5 cm, preferably smaller than 3 cm.

2. A process according to claim 1, **characterised in**

**that** a first portion (25) of the produced polyurethane foam, which is produced from said first reaction mixture (7), has a first density ($D_1$) and a first average width ($w_1$) whilst a second portion (26) of the produced polyurethane foam, which is produced from said second reaction mixture (8), has a second density ($D_2$) and a second average width ($w_2$), the first reaction mixture (7) being fed in the first trough section (4) at a substantially constant first flow rate $Q_1$, which is substantially equal to $H*w_1*v*D_1$, whilst the second reaction mixture (8) is fed in the second trough section (5) at a substantially constant second flow rate $Q_2$, which is substantially equal to $H*w_2*v*D_2$.

3. A process according to claim 1 or 2, **characterised in that** said partition wall (3) separates the rising reaction mixtures at least until they have risen to 1%, preferably 2% and more preferably 3% of their total rise height.

4. A process according to any one of the claims 1 to 3, **characterised in that** said partition wall (3) separates the rising reaction mixtures at the most until they have risen to 20%, preferably 15% and more preferably 10% of their total rise height.

5. A process according to any one of the claims 1 to 4, **characterised in that** the trough (2) is divided by at least two partition walls (3) in at least three trough sections, including said first and second trough sections (4, 5) and a third trough section (6) having a third volume ($V_3$), and a third foamable polyurethane reaction mixture (9), different from the first reaction mixture (7), is fed in the third trough section (6), the third reaction mixture (9) coming into contact with the first reaction mixture (7) upon leaving the third trough section (6) to produce a third portion (27) of the polyurethane foam blocks adjoining the first portion (25) produced from the first reaction mixture (7), said first ($V_1$) and third volumes ($V_3$) being selected in such a manner that, when leaving the third trough section (6) and coming into contact with the first reaction mixture (7), the third reaction mixture (9) has risen to a third average height ($h_3$), which differs less than 2 cm, preferably less than 1 cm, from the first average height ($h_1$), and the first and third reaction mixtures (7, 9) being formulated to have such a rise profile that, when rising both from the first and the third heights to at least 70% of said average height (H), any difference between the average heights of the rising first and third reaction mixtures, determined in a direction perpendicular to the travelling direction (24) of the foam and assuming a vertical interface between the rising reaction mixtures, is smaller than 5 cm and preferably smaller than 3 cm.

6. A process according to claim 5, **characterised in that** said third reaction mixture (9) is the same as said second reaction mixture (8).

7. A process according to claim 5 or 6, **characterised in that**

- the trough (2) is divided by at least four partition walls (3) in at least five trough sections, including said first, second and third trough sections and a fourth and a fifth trough section having respectively a fourth ($V_4$) and a fifth volume ($V_5$),
- a fourth foamable polyurethane reaction mixture, different from the second reaction mixture, being fed in the fourth trough section, the fourth reaction mixture coming into contact with the second reaction mixture upon leaving the fourth trough section, said second ($V_2$) and fourth volumes ($V_4$) being selected in such a manner that, when leaving the fourth trough section and coming into contact with the second reaction mixture, the fourth reaction mixture has risen to a fourth average height ($h_4$), which differs less than 2 cm, preferably less than 1 cm, from the second average height ($h_1$), and the second and fourth reaction mixtures being formulated to have such a rise profile that, when rising both from the second and the fourth heights to at least 70% of said average height (H), any difference between the average heights of the rising second and fourth reaction mixtures, determined in a direction perpendicular to the travelling direction of the foam and assuming a vertical interface between the two rising reaction mixtures, is smaller than 5 cm and preferably smaller than 3 cm, and
- a fifth foamable polyurethane reaction mixture, different from the third reaction mixture, is fed in the fifth trough section, the fifth reaction mixture coming into contact with the third reaction mixture upon leaving the fifth trough section, said third ($V_3$) and fifth volumes ($V_5$) being selected in such a manner that, when leaving the fifth trough section and coming into contact with the third reaction mixture, the fifth reaction mixture has risen to a fifth average height ($h_5$), which differs less than 2 cm, preferably less than 1 cm, from the third average height ($h_3$), and the fifth and third reaction mixtures being formulated to have such a rise profile that, when rising both from the third and the fifth heights to at least 70% of said average height (H), any difference between the average heights of the rising third and fifth reaction mixtures, determined in a direction perpendicular to the travelling direction of the foam and assuming a vertical interface between the two rising reaction mixtures, is smaller than 5 cm and preferably smaller than 3 cm.

8. A process according to claim 7, **characterised in that** said fourth and fifth reaction mixtures are the same as said first reaction mixture and are in particular formulated to produce a polyurethane foam which has a lower hardness than the polyurethane foams produced from said second and third reaction mixtures.

9. A process for manufacturing mattresses having at least two zone made of a different polyurethane foam, **characterised in that** said mattresses are cut in a transverse direction out of a polyurethane foam block manufactured in accordance with a process according to any one of the claims 1 to 8.

10. A polyurethane foam block obtainable by a process according to any one of the claims 1 to 8, **characterised in that** it has a substantially flat bottom surface, an average width (W) larger than 1 m, in particular larger than 1.5 m, an average height larger than 0.7 m and a length larger than 5 m, and consists of at least two longitudinal portions (25-29) made of different foamable polyurethane reaction mixtures and forming at least one interface, said interface defining in different cross-sections of the block different interface lines (30), which interface lines (30) are either straight and forming an angle ($\alpha$) of between 80° and 90°, preferably between 85° and 90°, with said bottom surface, or the interface lines (30) are curved, in which case linear lines (31), which are drawn through the respective interface lines (30) so that the surface area (32) between the interface line (30) and this linear line (31) is minimised, form an angle ($\alpha$) of between 80° and 90°, preferably between 85° and 90°, with said bottom surface.

11. A polyurethane foam block according to claim 10, **characterised in that** said interface lines (30) are either straight or curved, in the case of curved interface lines (30) any distance between the interface lines (30) and said linear lines (31), measured in a direction parallel to the bottom surface, is smaller than 5 cm and preferably smaller than 3 cm, in the cross-sectional areas of the foam block between a height of $0.05*H$ and a height of $0.95*H$ measured from the bottom surface of the block.

12. A polyurethane foam mattress obtainable by a process according to claim 9, in particular a mattress cut out in the transverse direction of a polyurethane foam block according to claim 10 or 11, **characterised in that** it has at least two zones made of a different polyurethane foam and two opposite large faces which are both obtained by cutting the mattress out of a foam block.

*Fig. 1*

*Fig.2*    *Fig.3*    *Fig.4*

EP 1 508 422 A1

$h_4$ 28

$h_2$ 26

$h_1$ 25

$h_3$ 27

$h_5$ 29

**Fig.5**

H

30 28

26

30 25

27

29

W

**Fig.6**

31 30

32

32

31 30

32

32

**Fig.7**

EP 1 508 422 A1

Fig. 8

Fig. 9

))) **European Patent Office**

# EUROPEAN SEARCH REPORT

Application Number

EP 04 10 3077

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | US 3 786 122 A (BERG L) 15 January 1974 (1974-01-15) * column 5, line 13 - line 15; claim 2; figure 2 * | 1-12 | B29C44/22 B29C44/46 B29C44/46 |
| Y | US 4 073 839 A (BURKHOLDER THEODORE B ET AL) 14 February 1978 (1978-02-14) * the whole document * | 1-12 | |
| A | ES 2 138 904 A (BETERE FAB LUCIA ANTONIO) 16 January 2000 (2000-01-16) * abstract * | 7 | |

TECHNICAL FIELDS SEARCHED (Int.Cl.7)

B29C

The present search report has been drawn up for all claims

| Place of search | Date of completion of the search | Examiner |
|---|---|---|
| The Hague | 5 October 2004 | Pipping, L |

EPO FORM 1503 03.82 (P04C01)

## ANNEX TO THE EUROPEAN SEARCH REPORT
## ON EUROPEAN PATENT APPLICATION NO.

EP 04 10 3077

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2004

| Patent document cited in search report | | Publication date | Patent family member(s) | | Publication date |
|---|---|---|---|---|---|
| US 3786122 | A | 15-01-1974 | NO | 131636 B | 24-03-1975 |
| | | | AT | 348248 B | 12-02-1979 |
| | | | AT | 748471 A | 15-06-1978 |
| | | | AU | 451605 B2 | 15-08-1974 |
| | | | AU | 3231771 A | 19-04-1973 |
| | | | BE | 771806 A1 | 31-12-1971 |
| | | | CA | 972912 A1 | 19-08-1975 |
| | | | CH | 538927 A | 15-07-1973 |
| | | | DE | 2142450 A1 | 09-03-1972 |
| | | | DK | 142785 B | 26-01-1981 |
| | | | EG | 10336 A | 31-10-1976 |
| | | | ES | 394460 A1 | 16-10-1974 |
| | | | ES | 419051 A1 | 01-05-1976 |
| | | | FI | 53940 B | 31-05-1978 |
| | | | FR | 2105166 A1 | 28-04-1972 |
| | | | GB | 1354341 A | 05-06-1974 |
| | | | HU | 165630 B | 28-09-1974 |
| | | | IL | 37483 A | 10-09-1974 |
| | | | IT | 939770 B | 10-02-1973 |
| | | | JP | 51034426 B | 27-09-1976 |
| | | | KE | 2562 A | 19-09-1975 |
| | | | LU | 63782 A1 | 06-01-1972 |
| | | | NL | 7111955 A ,B | 03-03-1972 |
| | | | OA | 3862 A | 24-12-1971 |
| | | | PL | 77832 B1 | 30-04-1975 |
| | | | SE | 374886 B | 24-03-1975 |
| | | | SU | 655296 A3 | 30-03-1979 |
| | | | SU | 559631 A3 | 25-05-1977 |
| | | | TR | 19550 A | 01-07-1979 |
| | | | YU | 222671 A1 | 25-02-1982 |
| | | | ZA | 7105283 A | 28-03-1973 |
| US 4073839 | A | 14-02-1978 | CA | 1092312 A1 | 30-12-1980 |
| | | | DE | 2716571 A1 | 27-10-1977 |
| | | | FR | 2348807 A1 | 18-11-1977 |
| | | | GB | 1534478 A | 06-12-1978 |
| | | | IT | 1086727 B | 31-05-1985 |
| | | | JP | 52127971 A | 27-10-1977 |
| ES 2138904 | A | 16-01-2000 | ES | 2138904 A1 | 16-01-2000 |

EPO FORM P0459

For more details about this annex : see Official Journal of the European Patent Office, No. 12/82